# EUROPEAN PATENT APPLICATION

(11) **EP 1 983 756 A1**
(43) Date of publication of application: **22.10.2008**
(21) Application number: 07300961.5
(22) Date of filing: 18.04.2007
(51) Int. Cl.: H04N 7/24, H04N 7/26, H04B 1/38, H04N 7/14, H04M 1/725

(54) **Portable device with video output**

(71) Applicant: ST MICROELECTRONICS S.A., 92120 Montrouge (FR)
(72) Inventor: Longchambon, Jean-Claude, 38210, TULLINS (FR); Nivet, Jean, 38100, GRENOBLE (FR); Dutoit, Denis, 38120, FONTANIL CORNILLON (FR)
(74) Representative: de Beaumont, Michel

(57) **Abstract**

The invention concerns circuitry for providing an output video signal from a portable device to an external display (318), the circuitry including a processor block (302) with an image processor, and a video encoder block (304) with a video encoder (320) for providing the output video signal to the external display, the processor block and the video encoder block being connected to each other by a serial interface (310, 316, 314, 318) arranged to provide image date from the processor block to the video encoder, the serial interface having at least one data lane (316) and at least one first clock lane (318), wherein the video encoder block includes a first input (316b) connected to the at least one data lane for receiving image data and a second input (318b) connected to the at least one first clock lane for receiving a first clock signal, and wherein at least one of the video encoder block and the processor block has a third input (316a) arranged to receive a control signal for controlling data flow over the serial interface.

## Description

### FIELD OF THE INVENTION

The present invention relates to a portable device having a video output, and in particular a portable device having a video output suitable for connection to an external display screen.

### BACKGROUND TO THE INVENTION

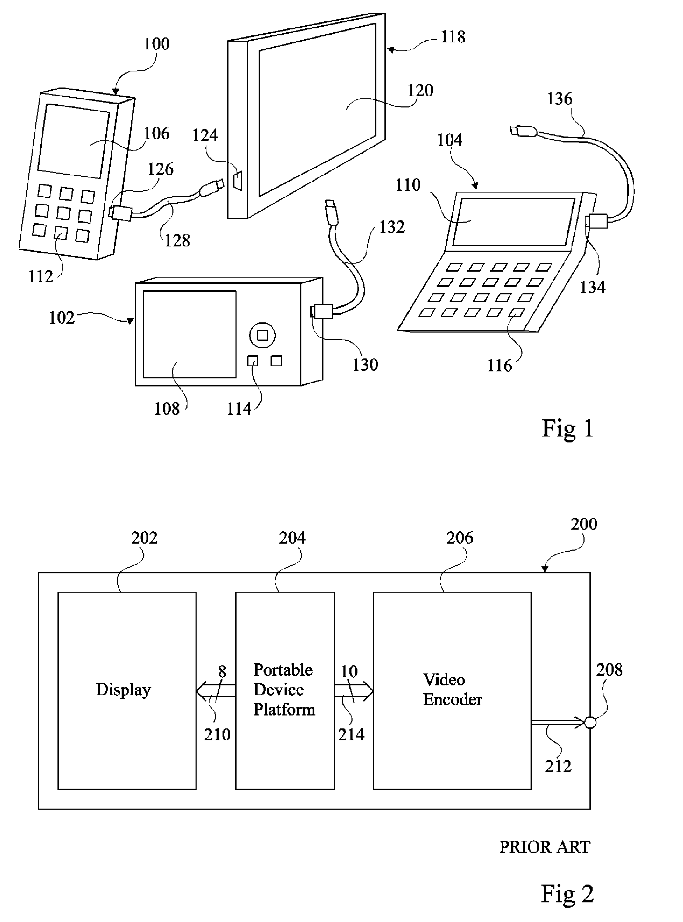

Figure 1 illustrates three portable electronic devices 100, 102 and 104. Device 100 is a mobile telephone, device 102 is a compact digital camera, and device 104 is a PDA (personal digital assistant). Each portable device comprises a built-in display screen 106, 108 and 110, respectively, for example comprising an LCD (liquid crystal display). Furthermore, each device comprises a number of control input buttons 112, 114 and 116, respectively, allowing a user to control each device. All three portable devices are able to display a range of media images on their respective displays, including images captured by built-in or external video cameras, images received via a wireless network or other wireless interface, or images generated from date stored in the memory, for example an electronic phonebook comprising contact phone numbers. Due to the portable nature of the devices 100 to 104, the displays 106, 108 and 110 are relatively small in size. This can make viewing images uncomfortable for a user. Furthermore, if the user wishes to present the images to a group of people, such a display is impractical.

It has been proposed to provide such portable devices with output interfaces for connecting them to external display screens, such as televisions. Such a display 118 is shown in Figure 1. Display 118 for example comprises a relatively large LCD (liquid crystal display) 120, for example in the range of 14 to 72 inches in diameter, or larger. Furthermore, display 118 comprises an input port 124 allowing connection to another device. Input port 124 is for example an S-video input, HDMI input, or other video input, for receiving a digital or analog video signal. Portable devices 100, 102 and 104 each comprises a video output port, which can be used for connecting the portable device to video input port 124 of the display 118, using a suitable lead. For example, portable device 100 is provided with an output video port 126 allowing it to be connected to input port 124 using lead 128. Likewise, devices 102 and 104 are provided with output ports 130 and 134 allowing these devices to be connected to the video input port 124 of display 118 via leads 132 and 136, respectively.

In such portable devices, whereas a display may be driven by the processor on the portable device platform, an external display generally requires a video encoder to generate the output video. This is partly due to the format that is required for the video signal, which must be one of the few most common formats accepted by television input video ports, and also due to the power level required for the output video signal to an external display, which is much higher than that required for a built-in display due to the much larger distance that the signals are transmitted, and to give high noise immunity.

Figure 2 is a schematic diagram illustrating functional blocks within a portable device 200, which is for example any of the portable devices of Figure 1. Device 200 comprises a display 202, a portable device platform 204, comprising a processor unit, and a video encoder block 206 for generating the video signal to an external display. The portable device 200 also has a video output port 208, for connecting to the external display. The portable device platform 204 processes images to be displayed, and provides these by a parallel interface 210 to display 202, interface 210 for example comprising 8 parallel data lanes. If the images are to be displayed on an external display, the processor 204 provides the image data on a parallel interface 214 to the video encoder 206, which generates the required analog or digital video stream to be transmitted to the output circuit via line 212.

Interface 214 between the portable device platform 204 and video encoder 206 is a parallel interface, allowing the relatively high data rates required for providing a video signal to an external display. For example, for providing an analog television output, the parallel interface could have between 8 and 10 data lines, allowing 8 to 10 bits to be transmitted at the same time, or for a digital television output, the parallel interface could have between 12 and 24 data lines.

However, this arrangement has a number of disadvantages. The positioning of the video encoder 206 is limited to being relatively close to the portable device platform 204, because such parallel interfaces are not suited to connections over larger distances. Furthermore, such parallel solutions require a large number of pins on both the portable device platform 204 and the video encoder 206, and have relatively high power consumption.

An alternative solution would be to integrate the video encoder 206 on the portable device platform. However, such a solution has the problems due to heat dissipation, as heat generated by the video encoder can have a negative influence on the rest of the platform, for example by increasing gate transfer times and increasing current leakage. This solution also presents technological compatibility constraints. Furthermore, if a new video encoder design is to be implemented, for example to update a portable device for a new video technology standard, the whole platform would need to be rebuilt.

### SUWGRY OF THE INVENTION

Embodiments of the present invention aim to provide a portable device having improved video output circuitry when compared to the prior art.

According to one aspect of the present invention, there is provided circuitry for providing an output video signal from a portable device to an external display, the circuitry comprising a processor block comprising an image processor, and a video encoder block comprising a video encoder for providing the output video signal to the external display, the processor block and the video encoder block being connected to each other by a serial interface arranged to provide image date from the processor block to the video encoder, the serial interface comprising at least one data lane and at least one first clock lane, wherein the video encoder block comprises a first input connected to the at least one data lane for receiving image data and a second input connected to the at least one first clock lane for receiving a first clock signal, and wherein at least one of the video encoder block and the processor block comprises a third input arranged to receive a control signal for controlling data flow over the serial interface.

According to one embodiment of the present invention, the third input is connected to a second clock line for receiving a second clock signal generated by a clock generation circuit.

According to one embodiment of the present invention, the clock generation circuit is provided in the video encoder block, the processor block comprises the third input for receiving the second clock signal, and wherein the first clock signal is generated based on the second clock signal.

According to another embodiment of the present invention, third input is connected to the at least one data lane, the at least one data lane being bidirectional, the control signal being transmitted from the video encoder block to the portable device platform on the at least one data lane, wherein the video encoder block comprises a pixel buffer for receiving the image data received via the serial interface.

According to another embodiment of the present invention, the video encoder block comprises receive circuitry arranged to receive data transmitted on the at least one data lane and to transmit the control signal via the serial interface to the processor block when data in the pixel buffer has been read by the video encoder, the control data indicating to the processor block that more image data can be transmitted.

According to another embodiment of the present invention, each of the data lanes comprises two wires, data being transmitted serially and differentially on the two wires.

According to yet another embodiment of the present invention, serial interface comprises two or more data lanes and one clock lane.

According to one aspect of the present invention, there is provided a portable device comprising an output port for providing a output video signal to an external display and the above circuitry arranged to generate the output video signal.

According to an embodiment of the present invention, the portable device further comprises a built-in display and wherein the video encoder block is coupled to the built-in display, such that the serial interface can be used for transmitting video data to either the external display or the built-in display.

According to one aspect of the present invention, there is provided a method of transmitting image data from a processor block to a video encoder block of a portable device, the video encoder block comprising a video encoder arranged to output a video signal to an external display, the method comprising transmitting image data serially from the processor block to the video encoder; transmitting a first clock signal from the processor block to the video encoder; and transmitting a control signal between the processor block and the video encoder, the flow control signal controlling data flow of the image data.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which:
Figure 1 (described above) illustrates examples of portable devices and an external display;
Figure 2 (described above) illustrates an example of functional blocks in a portable device;
Figure 3 schematically illustrates a portable device comprising hardware for generating a video output according to an embodiment of the present invention;
Figure 4 illustrates the hardware of Figure 3 in more detail according to an embodiment of the present invention;
Figure 5 illustrates hardware of Figure 3 in more detail according to an alternative embodiment of the present invention; and
Figure 6 is a diagram illustrating signals passing between the hardware blocks of Figure 5.

### DETAILED DESCRIPTION OF THE INVENTION

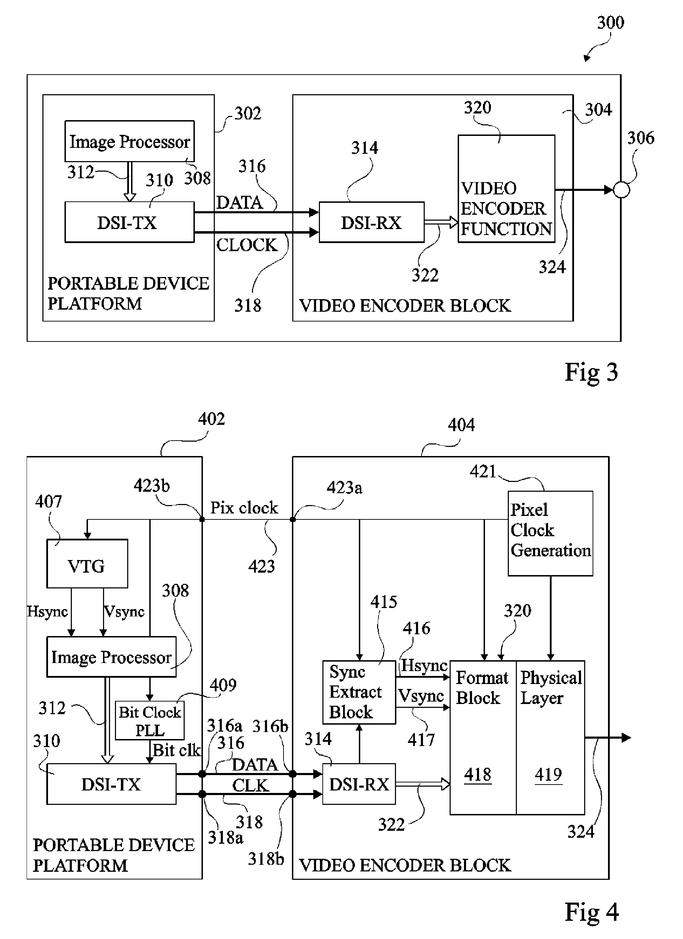

With reference to Figure 3, a portable device 300 is illustrated in schematic form showing the internal hardware blocks for generating and encoding a video signal for output to a display external to the device, which will be referred to as an "external display" herein. As illustrated, the device comprises a portable device platform 302, which is for example the main processor block of the device that performs processing for the main functions of the device. It also comprises a video encoder block 304 for generating a video signal and output port 306 for outputting the video signal to an external display, such as display 118 described above, or similar CRT, plasma or LCD television display. The device 300 also comprises one or more built-in displays which are not shown in the figures.

The portable device platform 302 comprises an image processor 308, connected to a DSI (display serial interface) transmit block 310, the image processor 308 and block 310 connected together by data bus 312. The video encoder block 304 comprises a DSI receive block 314, which communicates with DSI transmit block 310 of the portable device platform via a serial connection comprising one or more serial data lanes 316 and a clock lane 318. The terms "data lane" and "clock lane" are used herein to designate a single serial connection, by which individual bits of data are transmitted serially, one at a time. These lanes may each comprise a single wire, or more preferably, in order to help compensate for noise, they may each comprise two differential wires. In the latter case, a "1" is for example transmitted as a pulse on one of the wires, and a "0" is for example transmitted as a pulse on the other wire. Thus a single bit of data or a clock signal is transmitted on a single lane, using one or two wires.

Serial data lanes 316 for example comprise two data lanes, allowing twice the data rate when compared to a signal serial data lane. In a parallel connection, the bits of a symbol, for example 8 or 12 bits of data, are all transmitted at the same time, on 8 or 12 separate lanes, whereas in a serial connection, data bits forming each data symbol are transmitted serially, one after the other, on a same lane. For example in the serial interface, a first byte could be sent on the first data lane, then a second byte on the second data lane, followed by a third byte on the first data lane etc. However, the same byte is not spread across many data lanes. Thus whereas a parallel connection suffers problems due to differences in propagation delays between the parallel lanes, and thus transmission speeds and distances are limited, serial interfaces, even comprising multiple data lanes, do not suffer from these drawbacks.

The clock lane 318 is used to transmit timing information allowing the serial data signal to be correctly received at DSI receive block 314. The DSI receive block 314 is connected to a video encoder 320, via a data bus 322. The video encoder 320 generates and outputs a video signal on line 324 having the appropriate format for output by the output port 306 to the external display.

The serial data lanes 316 and the clock lane 318 combined with the DSI transmit block 310 and receive block 314 provide a serial interface between the portable device platform 302 and the video encoder block 304, by which video signals are transmitted. The serial interface in this example complies with the MIPI (mobile industry processor interface) DSI standard, which is a display serial interface protocol aimed for use when video data is transferred from an image processor to the built-in LCD display on a portable device. The DSI interface is not intended for use in providing video data for display on an external display to a video encoder, however, according to the embodiments described here, the DSI interface is adapted to such a use. This is advantageous as it allows existing technology on the portable device platform to be used for providing data to the video encoder. Furthermore, the same serial interface could be used to provide data to either the built-in display or the external display. In alternative embodiments, the DSI interface could be replaced by any suitable serial interface.

Examples of the display serial interface adapted for use for transmitting video data between the portable device platform and the video encoder block will now be described with reference to Figures 4, 5 and 6.

With reference to Figure 4, blocks 402 and 404 represent the portable device platform 302 and the video encoder block 304 respectively of Figure 3 in more detail, according to one embodiment.

As illustrated, the portable device platform 402 comprises a video timing generator (VTG) block 407, which provides a horizontal synchronization signal Hsync, and a vertical synchronization signal Vsync on separate lines to the image processor 308. The image processor 308 is connected to the DSI transmit block 310 by a data bus 312. Image processor 308 also provides a timing signal to a bit clock phase locked loop (PLL) 409, which provides a bit clock signal to the display serial interface transmit block 310. The DSI transmit block 310 is connected to the DSI receive block 314 by the one or more serial data lanes 316 and a clock lane 318 as described above. Thus the portable device platform comprises one or more output pins 316a and an output pin 318b for outputting the data and clock respectively, and the video encoder block comprises one or more input pins 316b and an input pin 318b, for receiving the data and clock respectively.

In the video encoder block 404, a Sync extract block 415 is provided, which receives part of the data signal provided on data lanes 316 to the DSI receive block 314, and extracts synchronization information, and provides the horizontal synchronization signal Hsync signal and the vertical synchronization signal Vsync signal to the video encoder block 320 on lines 416 and 417. In particular, the synchronization information is transmitted with the video data over the DSI interface. However, the precision of the positioning of this synchronization signal issued by the DSI receive block 314 may not be sufficient, and therefore the synchronization signals are preferably re-positioned, or resynchronized by the sync extract block 415 with respect to a pixel clock (used to time the output video signal as described in more detail below), and thus match the requirements of the video encoder 320. The video encoder function block 320 comprises a video encoder format block 418 and a physical layer 419.

The format block 418 formats, in a digital form, the video signal received on line 322 from the DSI receive block 314 with respect to the required video format, the synchronization signals 416 and 417, and the requirements of the physical layer block 419. For example, this formatting operation can be performed to provide analog video signals of type PAL, SECAM or NTSC, providing a composite video (CVBS) connection, an RGB connection, an S-video connection, a SCART connection, etc., or a digital video signal of type DVB, ATSC, or ISDB (Integrated services digital broadcasting (Japan)), connected by a digital interface, such as HDMI, DVI etc.

The physical layer 419 implements the final transformations on the signal to present it on the output video port 306. For analog video signals, this implies a digital to analog conversion and amplification. For digital TV, this implies implementing the physical layer protocol, which can require for example serialization, differential signalling or other functions for conveying the video and associated data. This could for example require the generation of a specific clock for data serialization (DVI or HDMA).

A pixel clock generation block 421 is provided in the video encoder block 404, although in alternative embodiments this block could be provided in the portable device platform 402 or elsewhere. Block 421 generates a pixel clock which is provided to the portable device platform on clock lane 423. Thus the video encoder block 404 comprises an output pin 423a and the portable device platform comprises an input pin 423b for transmitting and receiving the pixel clock respectively. In the portable device platform 402, the pixel clock is provided to the VTG block 407, the image processor 308, and to the bit clock PLL block 409. The PPL generates the bit clock signal for using on the clock lane 318 of the DSI interface, using the pixel clock as a reference. The bit clock frequency is preferably chosen such that it allows the transmission of all of the information contained in one pixel during a pixel clock period. The frequency will thus depend on the number of data lanes. For example it will be twice as high if there is only one data lane than if there are two data lanes.

Within the video encoder block 404, the pixel clock is provided to the sync extract block 415, allowing repositioning the synchronization signals with respect to the pixel clock as described above, to the video encoder format block 418 and to the physical layer 419. Blocks 418 and 419 are clocked by the pixel clock, such that the video signal output on line 324 to the output port 306 and to an external display is timed by the pixel clock. In particular, the pixel clock corresponds to the pixel frequency, in other words the frequency that pixel data is transmitted. Assuming an external display having 1280 active column pixels and 720 active line pixels, this corresponds to a pixel frequency of 74.25 MHz, and thus the pixel clock would have substantially this frequency, and a period of approximately 13 ns. To allow a range of different formats to be supported, the pixel clock frequency is adjustable in some embodiments. For example, the pixel clock is at approximately 13.5 MHz for standard analog television transmission, but at much higher rates for digital television such as HDTV.

The display serial interface standard allows for a video mode and a command mode of operation. The embodiment of Figure 4 uses a video mode of operation, which provides for synchronous operation between the serial link and the video encoder. The DSI transmit block 310 and receive block 314 are synchronized by using the same common pixel clock, which is the clock used for timing the output video signal. In alternative embodiments, a multiple of the pixel clock could be used for transmission over the serial interface. Furthermore, because the video encoder is timed using the pixel clock, the data rate output by the transmission block 310 is adapted to the rate that the video encoder formats and outputs the video signal to output port 306, thus avoiding data flow problems between the portable device platform 402 and the video encoder 404.

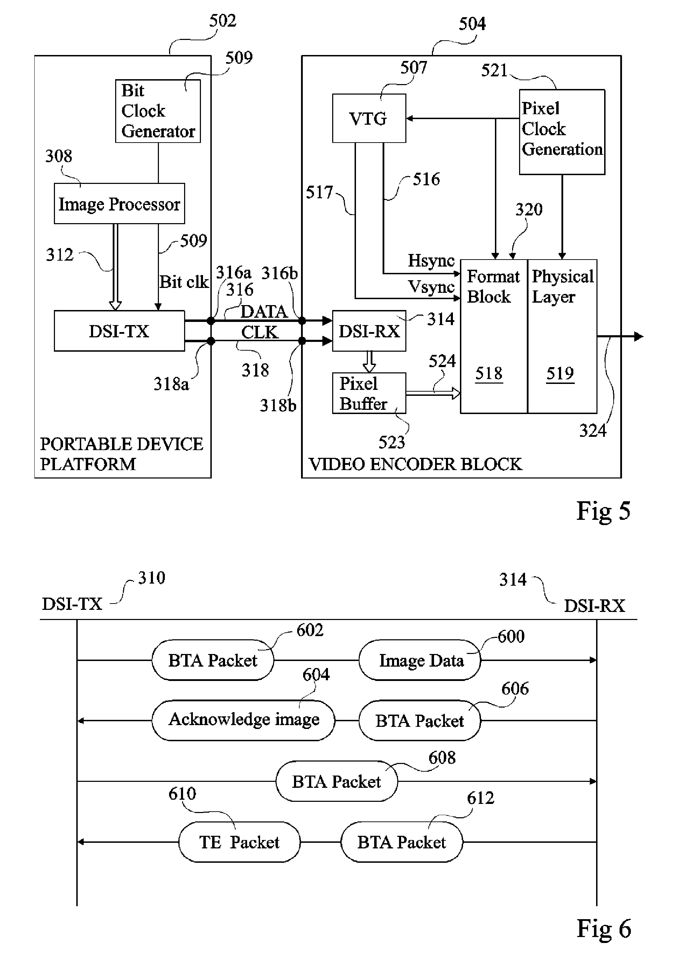

With reference to Figure 5, blocks 502 and 504 represent the portable device platform 302 and the video encoder block 304 respectively of Figure 3 in more detail, according to an alternative embodiment to that of Figure 4. In this embodiment, a video timing generation (VTG) block 507 is provided in the video encoder block 504. A bit clock generator 509 is provided on the portable device platform 502 and provides a bit clock on line 509 to the DSI transmission block 310. As previously, video data and timing information is transmitted via the serial interface from the DSI transmit block 310 to the DSI receive block 314, on one or more data lanes 316 and a clock lane 318 respectively. Thus output pins 316a and 318a are provided in the portable device platform and input pins 316b and 318b in the video encoder block for the data and clock signals respectively. In this embodiment, pin 316a is also an input for receiving data flow control signals as will be described below in more detail.

Any suitable serial interface could be used that includes a mechanism for preventing buffer underflow or overflow, as will be described in more detail below. In this embodiment no pixel clock is provided between the video encoder 504 and the portable device platform 502, which advantageously saves one port on the portable device platform 502 and the video encoder block 504.

The output of the DSI receive block 314 on line 522 is provided to a pixel buffer 523 which comprises memory for buffering image data received on the DSI interface. The pixel buffer 523 for example stores an entire image, for example data representing an image of 1280 by 720 pixels, although in alternative embodiments it could store more than a signal image, or part of an image. The pixel buffer 523 outputs the data on line 524 to the video encoder block 320. The encoder block 320 comprises a format block 518 and a physical layer 519. A pixel clock generation block 521 generates a pixel clock which is provided to the VTG 507, the format block 518 and the physical layer 519. The VTG provides the horizontal and vertical synchronization signals Hsync and Vsync on lines 516 and 517 respectively to the format block 518, which are timed based on the pixel clock.

The embodiment of Figure 5 uses a command mode of operation allowed for by the DSI standard, which is intended to allow the built-in display of the device to be controlled by asynchronous data commands. The use of this mode means that one less pin is required between the mobile device platform 502 and the video encoder block 504, when compared to the video mode of operation described above in which a pixel clock is transmitted from the video encoder to the portable device platform. The pixel buffer absorbs differences between the data rate of image data transmitted from the portable device platform, and the rate that the video encoder can use the data, in other words the rate that it formats and outputs the data. To avoid too little data being sent, and the image buffer 523 becoming empty, image data is preferably transmitted over the serial interface at a slightly higher rate than it is needed. At the same time, to avoid overflow of the data in the pixel buffer 523, a protocol is used over the serial interface to allow the transmission of image data on the serial interface to stop periodically and wait for the video encoder to finish processing the data in the image buffer 523, before overflow occurs. Otherwise, the image displayed on an external display can be degraded in quality if for example the pixel buffer 523 is over-written with new data before the data from the pixel buffer is read by the format block 518 and transmitted to the external display. This can result in an upper part of the display screen showing the previous image, and lower part of the display screen showing the updated image. This can give a blurring to the image known as the tearing effect. To overcome this problem, the data lanes 316 in this example are bidirectional, allowing some control signals to be exchanged between the DSI transmit and receive blocks 310, 314, as will now be described with reference to Figure 6.

Figure 6 illustrates a sequence of data and control signals transmitted between the DSI transmit and receive blocks 310, 314. A first data packet 600 is transmitted from the DSI transmit block 310 to the DSI receive block 314, this packet comprising image data, for example data representing a whole image. The image data is stored in the pixel buffer 523 of Figure 5. Data packet 600 is followed by a BTA (bus turn around) packet 602. BTA packet 602 has the effect of transferring control of one or more of the data lanes 316 to the DSI receive block 314. Generally, one data lane is sufficient. It should be noted that to conserve power, the clock lane 318 preferably remains under the control of the DSI transmit block 310, and the exchanges on one or more of the data lines 316 are done in "low power mode", in which the clock signal transmission on the clock lane 318 is for example stopped, and instead a clock is embedded with the serial data on a data lane. For example, data is transmitted from the DSI receive block 314 to the DSI transmit block 310 on a data lane 316 comprising two wires used differentially, such that a pulse on one wire encodes a "1", a pulse on the other wire encodes a "0", and the signals on each wire are provided to an OR gate which outputs the clock as the OR of both pulse. In alternative embodiments, the clock lane can remain active if the clock is for example used by the DSI receive block to generate internal timing signals.

The DSI receive block 318 responds by sending an acknowledge image packet 604, which confirms that the image, or the current part of the image, was correctly received. This is followed by a BTA packet 606, returning control of the data lanes to the DSI transmit block 310.

The DSI transmit block 310 then sends a further BTA packet 608 to the DSI receive block 318, which is interpreted as being a tearing effect request, in other words a request to check whether all of the data from the image buffer 523 has been read. Thus before the DSI transmit block 310 is able to transmit a new image to the DSI receive block 314, and in particular to over write image data in the pixel buffer 523, a BTA packet 608 is transmitted giving control of the data lanes 316 to the DSI receive block 314, and allowing it to delay transmission of the next packet of image data until the image data has been read by the format block 518. The video encoder block comprises circuitry for verifying when the data has been read from the pixel buffer 523, and once data has been read, the DSI receive block 314 transmits a TE (tearing effect) packet 610, which indicates that all data has been read from the pixel buffer 523, followed by a BTA packet 612, which indicates to the DSI transmit block 310 that the next image can be sent.

Thus circuitry has been described that is arranged to provide a video output from a portable device to an external display, wherein the video output signal for the video display is generated by a video encoder block which is connected to a processor block, for example the portable device platform 302, by a serial interface, on which data is transmitted serially. This has the advantage of reducing the number of pins required in the processor block and the video encoder, and of reducing power consumption when compared to a device having a video encoder connected to a processor block by a parallel interface. It also allows a greater physical separation between the processor block and the video encoder block when compared to a parallel interface, thereby improving heat dissipation, electromagnetic compatibility, and flexibility in terms of design. In particular, the video encoder block could be combined with other functions, such as power regulation, audio production or functions using similar technology and having similar power constraint.

Furthermore, it is particularly advantageous to allow an increased distance between the processor block and the video encoder block in some applications such as mobile telephones, where the video encoder may be better placed close to the display, which may not be very close to the processor block, in this case the mobile device platform.

As described above, the serial interface comprises at least one data lane 316 and at least one clock lane 318. The video encoder block comprises first and second inputs 316b, 318b for receiving image data and a clock transmitted on the data lane and clock lane respectively. Additionally, a further control signal is communicated between the processor block and the video encoder block to control data flow so that the image data is provided at the correct rate. When providing a video output to an external display, there is a risk that the data rate provide by the processor block will not match the rate that the image data is required by the display. Thus one of the video encoder block and the processor block further comprises a third input for receiving a control signal, which is used for flow control. For example, in the embodiment of Figure 4, the third input is an input 423b in the processor block for receiving the pixel clock on lane 423. The bit clock used to time data on the serial interface is generated based on the pixel clock and therefore the pixel clock provides a control of the data rate. Alternatively, if the pixel clock is generated in the processor block 402, the video encoder block 404 comprises an input for receiving the pixel clock, which is used to time data transmission by the video encoder, and thus controls the data rate that data is processed by the video encoder. If the pixel clock is generated elsewhere, then both the processor block and the video encoder block comprise a third input for receiving the pixel clock. Alternatively, in the embodiment of Figure 5, the control signal is sent on one or more of the data lanes 316, which are bidirectional, and thus the third input is provided in the processor block 402 for receiving the BTA or tearing effect control packet transmitted on one or more of the data lanes 316.

As described above, because the serial interface is also suitable for providing a video signal to the internal, built-in display of the portable device, in some embodiments the same serial interface can be used for providing the video to the in-built display and the external display, for example a switch being provided to switch the data to the appropriate block, i.e. to the in-built display or the format block 418, 518, based on which display is controlled. This would allow a further reduction in pins in the processor block. Furthermore, in some embodiments the portable device could be provided with two built-in displays, for example one being a secondary smaller display requiring a lower data rate. In this case, the DSI interface could be used to drive both built-in displays, the secondary display being daisy-chained to the first. Data to the secondary display can be inserted in empty periods between data transmissions to the primary built-in display.

The embodiment described above in relation to Figure 4 has the further advantage that both sides of the serial interface are controlled by a common clock. In particular they are synchronized using a pixel clock provided to both the processor block and the video encoder block, which provides an effective dataflow solution. In this embodiment minimal input buffering is required in the receiving circuitry of the DSI interface.

The embodiment described above in relation to Figure 5 on the other hand has the advantage that no pixel clock lane is required between video encoder and the processor block, reducing the number of pins in both.

If embodiments are provided with both a pixel clock lane 423 and a pixel buffer 523, then operation in both video mode and command mode is possible, allowing more flexibility. In particular, the video mode better exploits the maximum available data rate on the data lines, whereas command mode facilitates the control of more than one display at a time through the DSI interface. Thus the best mode can be selected depending on the operations to be performed, and in particular which displays need to be driven. The circuitry described in the various embodiments could be incorporated in a wide range of portable devices, including mobile phones, still and/or video digital cameras, PDAs, portable hand-held games consoles, etc.

Whilst a number of particular embodiments have been described above, it will be apparent to those skilled in the art that there are many alternatives and equivalent designs that can be used. For example, any features described above in relation to any of the embodiments could be combined with any other of the above features.

For example, while the embodiments have been described in which the portable device has one or more built-in displays, the portable device does not necessary comprise a built-in display, and instead video may only be displayed via the output video port 306.

While the particular example of the display serial interface (DSI) standard has been given, any suitable serial interface could be used comprising one or more data lanes on which data is transmitted serially. In the case of the embodiment of Figure 5, the DSI interface provides a bus turnaround capability used for synchronization, in other words to ensure data flows are matched. If a serial interface is used that does not allow this type of functionality, as an alternative, separate synchronization signals are for example exchanged between blocks 502 and 504. While the data lanes of the serial interface have been described as comprising one or two serial data lanes, any number of serial data lanes could be provided, depending on the data rate that information is to be transmitted.

The format of the video signal output from the video encoder block 404, 504 can be any of a number of different video formats, including DVI, HDMI, RGB, CVBS, Y-C, or other formats. The physical layers 419, 519 of the video encoder block are able to provide the signal that can be transmitted over a range of distances, for example for example 2m or more, allowing a relatively high separation between the portable device and the external display.

## Claims

1. Circuitry for providing an output video signal from a portable device to an external display (318), the circuitry comprising a processor block (302) comprising an image processor, and a video encoder block (304) comprising a video encoder (320) for providing said output video signal to said external display, said processor block and said video encoder block being connected to each other by a serial interface (310, 316, 314, 318) arranged to provide image date from said processor block to said video encoder, said serial interface comprising at least one data lane (316) and at least one first clock lane (318), wherein said video encoder block comprises a first input (316b) connected to said at least one data lane for receiving image data and a second input (318b) connected to said at least one first clock lane for receiving a first clock signal, and wherein at least one of said video encoder block and said processor block comprises a third input (423b, 316a) arranged to receive a control signal for controlling data flow over said serial interface.

2. The circuitry of claim 1, wherein said third input (423b) is connected to a second clock line for receiving a second clock signal generated by a clock generation circuit (421, 521).

3. The circuitry of claim 2, wherein said clock generation circuit is provided in said video encoder block, said processor block comprises said third input (423b) for receiving said second clock signal, and wherein said first clock signal is generated based on said second clock signal.

4. The circuitry of claim 1, wherein said third input (316a) is connected to said at least one data lane, said at least one data lane being bidirectional, said control signal being transmitted from said video encoder block to said portable device platform on said at least one data lane, wherein said video encoder block comprises a pixel buffer (523) for receiving said image data received via said serial interface.

5. The circuitry of claim 4, wherein said video encoder block comprises receive circuitry (314) arranged to receive data transmitted on said at least one data lane and to transmit said control signal via said serial interface to said processor block when data in said pixel buffer has been read by said video encoder, said control data indicating to said processor block that more image data can be transmitted.

6. The circuitry of any preceding claim, wherein each of said data lanes comprises two wires, data being transmitted serially and differentially on said two wires.

7. The circuitry of any preceding claim, wherein said serial interface comprises two or more data lanes and one clock lane.

8. A portable device comprising:
an output port (306) for providing a output video signal to an external display (118); and
the circuitry of any preceding claim arranged to generate said output video signal.

9. The portable device of claim 8, further comprising a built-in display and wherein said video encoder block is coupled to said built-in display, such that said serial interface can be used for transmitting video data to either said external display or said built-in display.

10. A method of transmitting image data from a processor block (302) to a video encoder block (304) of a portable device, said video encoder block comprising a video encoder (320) arranged to output a video signal to an external display, said method comprising:
transmitting image data serially from said processor block to said video encoder;
transmitting a first clock signal from said processor block to said video encoder; and
transmitting a control signal between said processor block and said video encoder, said flow control signal controlling data flow of said image data.
